# EUROPEAN PATENT APPLICATION

(11) **EP 0 646 326 A1**
(43) Date of publication of application: **05.04.1995**
(21) Application number: 94113646.7
(22) Date of filing: 31.08.1994
(51) Int. Cl.: A23L 1/236

(54) **Sweetening composition and process for its production**

(30) Priority: 01.09.1993 JP 239227/93; 15.08.1994 JP 213186/94
(71) Applicant: IWATA CHEMICAL CO., LTD., Iwata-shi, Shizuoka-ken 438 (JP)
(72) Inventor: Noguchi, Yuichi, c/o Iwata Chemical Co., Ltd., Shizuoka-ken 438 (JP); Moriya, Yoshiyuki, c/o Iwata Chemical Co., Ltd., Shizuoka-ken 438 (JP)
(74) Representative: Henkel, Feiler, Hänzel & Partner

(57) **Abstract**

A sweetening composition comprises an oligosaccharide in powder or granulated form that is film coated or otherwise coated with at least one synthetic sweetener selected from the group consisting of 4,1',6'-trichloro-4,1',6'-trideoxygalactosucrose, 6-methyl- 3,4-dihydro-1,2,3-oxathiazine-4-one-2,2-dioxide-potassium, 3-(L-aspartyl-D-alanine-amide)-2,2,4,4-tetramethylethane and α-L-aspartyl-L-phenylalanine methyl ester.

## Description

### BACKGROUND OF THE INVENTION

This invention relates to a sweetening composition for use in food and beverages that contains oligosaccharides as rendered less hygroscopic and more flowable so that its particles will not readily stick together. The invention also relates to a process for producing the sweetening composition.

Oligomers in powder or granulated form have the disadvantage that their particles will readily stick together and, hence, they are stored either in airtight aluminum bags or together with desiccants. However, these methods are not effective if oligosaccharides are exposed to high temperatures for prolonged periods in a summer season, because their particles tend to stick together due to the small amount of the water they contain. If dextrin, starch or other anti-sticking substances are incorporated, the sweetness potency of oligosaccharides will be reduced accordingly. If oligosaccharides are supplemented with sweeteners such as sugar and glucose, sticking starts to occur in areas where those sweeteners contact oligosaccharides and the whole part will eventually coagulate.

### SUMMARY OF THE INVENTION

The present invention has been accomplished under these circumstances and has as an object providing a sweetening composition that is free from the aforementioned problem with oligosaccharides that their particles tend to stick together on account of their hygroscopic nature.

Another object of the invention is to provide a sweetening composition containing an oligosaccharide that is improved in flowability and sweetness potency.

A further object of the invention is to provide processes for producing the above-mentioned sweetening compositions.

The present inventors conducted intensive studies with a view to solving the aforementioned problems of the prior art and found that the particles of 4,1',6'-trichloro-4,1',6'-trideoxygalacto-sucrose (hereunder referred to as "sucralose"), 6-methyl-3, 4-dihydro-1,2, 3-oxathiazine-4-one-2, 2-dioxide-potassium (hereunder referred to as "acesulfame- K"), 3-(L-aspartyl-D-alanineamide) -2,2,4, 4-tetramethylethane(hereunder referred to as "alitame") and α-L-aspartyl-L-phenylalanine methyl ester (hereunder referred to as "aspartame") (the four compounds are hereunder collectively referred to as the "synthetic sweeteners such as sucralose of the invention") would not easily stick together at room temperature. Based on this finding, the present inventors continued their studies and successfully developed sweetening compositions that had an enhanced sweetness potency and which were also improved in that their particles would not easily stick together.

The method developed by the present inventors was characterized in that the physiological properties and actions of oligosaccharides, such as high resistance to digestion and an ability to control the intestinal functions, and their satisfactory sweetness potencies were maintained and that yet their particles would not easily stick together. According to this method, oligosaccharides in powder or granulated form were film coated or otherwise coated with at least one of the synthetic sweeteners such as sucralose of the invention, thereby forming on the surfaces of the particles of the oligosaccharides part or all of thin layers that would not easily stick together, thus assuring high-yield production of oligosaccharide particles that were moistureproof and highly flowable and which yet had high sweetness potencies.

Thus, the invention relates in one aspect to a process for producing sweetening compositions that comprises the steps of film coating or otherwise coating oligosaccharides in powder or granulated form with an aqueous or alcoholic solution or slurry of at least one of the synthetic sweeteners such as sucralose of the invention and then drying the thus treated oligosaccharides.

The invention relates in another aspect to sweetening compositions that comprise oligosaccharides that have been film coated or otherwise coated with at least one of the synthetic sweeteners such as sucralose of the invention.

### DETAILED DESCRIPTION OF THE INVENTION

The oligosaccharides in powder or granulated form which are to be used in the invention may be of any types that contain at least 10 wt% of trisaccharides, tetrasaccharides, heptasaccharides, hexasaccharides or heptasaccharides and that are suitable for incorporation in common food and beverages. Exemplary oligosaccharides that fall in this category include lactulose, fructooligosaccharide, galactooligosaccharide, raffinose, isomaltooligosaccharide, xylooligosaccharide, lactosucrose, palatinose oligosaccharide, gentioligosaccharide, etc. The improvements as achieved in flowability and hygroscopicity by the invention are particularly marked with highly hygroscopic oligosaccharides typified by fructooligosaccharide and galactooligosaccharide.

The particle size of the oligosaccharides to be used as a starting material is not limited to any particular value but preferably they have particle sizes of about 5 - 200 mesh, with the range 20 - 60 mesh being more preferred. The synthetic sweeteners such as sucralose to be used as another starting material in the invention should have the smallest possible particle size but they are preferably of such a size that they can be passed by 100- to 200-mesh screens. The synthetic sweeteners such as sucralose of the invention may be contained in amounts equal to or smaller than those of the oligosaccharides and the preferred amount is about 0.1 - 1 wt% of the oligosaccharides. Thus, the synthetic sweeteners such as sucralose of the invention need be used in only small amounts and yet the objects of the invention can be fully attained.

The aqueous or alcoholic solution or slurry of the synthetic sweeteners such as sucralose of the invention may have concentrations of 0.5 - 5% of water or alcohol, with the preferred range being from 1.5% to 3.5%. The temperature of the solution or slurry is preferably in the range from 60° C to 80° C.

The alochol to be used in the invention is preferably ethyl alcohol, with a 5 - 20% aqueous ethyl alcohol solution being more preferred. When preparing the solution or slurry of the synthetic sweeteners such as sucralose of the invention, α-starch, dextrin, lactose, as well as natural or synthetic supplements may be added in suitable amounts, say, about 1 - 2% of the oligosaccharides. Among these additives, dextrin is particularly preferred for the purpose of permitting the synthetic sweeteners such as sucralose of the invention to adhere firmly to the surfaces of the particles of oligosaccharides, thereby assuring enhanced coating effects and to further improve the flowability of those particles while reducing their hygroscopicity. The concentration of dextrin, if used at all, is not limited to any particular value but a suitable range is from 1 to 5 wt% of solids.

The oligosaccharide particles may be film coated or otherwise coated with the synthetic sweeteners such as sucralose of the invention by blowing hot air into a fludized bed granulation dryer from below so that the powder of an oligosaccharide in the dryer is fluidized while the solution or slurry of the synthetic sweeteners such as sucralose of the invention is sprayed onto the fluidized particles as they are dried.

The atomizing air pressure is preferably in the range of 2 - 5 kg/cm²; given pressures in this range, the solution or slurry of the synthetic sweeteners such as sucralose of the invention can not only be fully atomized but also be effectively film coated on the oligosaccharide particles in a fluidized state. The solution or slurry to be sprayed is preferably supplied with a metering pump. To insure that the oligosaccharide particles will maintain an effectively fluidized state, the dampers in the air supply and exhaust pipes should be adjusted in such a way that if the supply rate of the spray solution or slurry is excessive and may potentially impair the fluidized state of the oligosaccharide particles, the supply of the spray solution or slurry is slowed down or stopped to assure complete drying of the surfaces of the oligosaccharide particles. It should be noted that prior to drying the oligosaccharide particles which have been film coated or otherwise coated with the sweeteners such as sucralose of the invention, hot water is preferably sprayed to treat the surfaces of the oligosaccharide particles so that they are given uniform coating of the deposited synthetic sweeteners such as sucralose of the invention.

For best drying, the apparatus is preferably operated in such a way that the temperature of exhaust air lies between 50° C and 60° C. The feed air temperature is preferably controlled to lie between 80° C and 100° C. The exhaust air temperature is approximate to the temperature of the product oligosaccharide and measured with temperature sensors installed about 90 cm above the nozzles for spraying the synthetic sweeteners such as sucralose of the invention. The feed air temperature is measured with temperature sensors installed about 30 cm below the underside of the grating which is mounted on the bottom of the chamber in which the oligosaccharide is fluidized and the reading by the sensors indicates the temperature of the heated air before it contacts the oligosaccharide particles to be coated with the synthetic sweeteners such as sucralose of the invention.

The following examples are provided for the purpose of further illustrating the present invention but are in no way to be taken as limiting.

### Example 1

Galactooligosaccharide (997 g) at least 80% of which was comprised of particles having a size of -40 +60 mesh was charged into a fluidized bed granulation dryer. Heated air (80° C) was blown into the dryer from below so as to keep the galactooligosaccharide in a fluidized state; at the same time, the surfaces of the fluidized oligosaccharide particles were sprayed with a preliminarily conditioned solution of sucralose (3 g) in hot water (80° C, 130 g) at an atomizing air pressure of 2.5 kg/cm² as the solution was supplied from a rotary metering pump whose rotational speed was so controlled that 5 g of the solution could be fed per minute. During the spraying, the exhaust air temperature was at 50 - 55° C.

The sucralose solution was kept heated so that its temperature would not drop below 60° C.

After the end of spraying the metered volume of the sucralose solution, the oligosaccharide particles were sprayed with hot water (80° C, 20 g) over 30 min. After the end of spraying the hot water, the oligosaccharide particles were dried with hot blown air (70° C) for 10 min.

The oligosaccharide powder thusly coated with sucralose had the formulation and particle size distribution set forth below and it was comprised of highly flowable particles.

| Formulation | |
|---|---|
| Components | Proportions |
| Galactooligosaccharide | 99.7% |
| Sucralose | 0.3% |

| Particle size distribution | |
|---|---|
| +20 mesh | 1.7% |
| -20 +40 mesh | 17.3% |
| -40 +60 mesh | 70.0% |
| -60 +80 mesh | 9.4% |
| -80 mesh | 1.6% |

### Example 2

Fructooligosaccharide (997 g) having the same particle size as the galactooligosaccharide used in Example 1 was charged into a fluidized bed granulation dryer of the same type as used in Example 1 and fluidized under the same conditions as employed in Example 1. The fluidized oligosaccharide particles were sprayed with a preconditioned solution of sucralose (3 g) in hot water (80°C, 130 g) under the same conditions as in Example 1; thereafter, the coated oligosaccharide particles were sprayed with hot water (80°C, 20 g) and dried under the same conditions as in Example 1.

The thusly obtained sweetening composition had the formulation and particle size distribution set forth below.

| Formulation | |
|---|---|
| Components | Proportions |
| Fructooligosaccharide | 99.7% |
| Sucralose | 0.3% |

| Particle size distribution | |
|---|---|
| +20 mesh | 1.9% |
| -20 +40 mesh | 18.0% |
| -40 +60 mesh | 75.0% |
| -60 +80 mesh | 4.5% |
| -80 mesh | 0.6% |

### Example 3

Galactooligosaccharide (987 g) having the same particle size as used in Example 1 was charged into a fluidized bed granulation dryer of the same type as used in Example 1 and fluidized under the same conditions as employed in Example 1. The fluidized oligosaccharide particles were sprayed with a preconditioned solution of sucralose (3 g) and dextrin of DE 8 ± 1 (10 g) in hot water (80°C, 130 g) under the same conditions as in Example 1; thereafter, the coated oligosaccharide particles were sprayed with hot water (80°C, 20 g) under the same conditions as in Example 1. The thusly obtained sweetening composition had the formulation and particle size distribution set forth below.

| Formulation | |
|---|---|
| Components | Proportions |
| Galactooligosaccharide | 98.7% |
| Dextrin | 1.0% |
| Sucralose | 0.3% |

| Particle size distribution | |
|---|---|
| +20 mesh | 2.4% |
| -20 +40 mesh | 25.2% |
| -40 +60 mesh | 71.3% |
| -60 +80 mesh | 1.0% |
| -80 mesh | 0.1% |

### Example 4

The procedure of Example 3 was repeated under the same conditions, except that the galactooligosaccharide was replaced by fructooligosaccharide. The obtained sweetening composition had the formulation and particle size distribution set forth below.

| Formulation | |
|---|---|
| Components | Proportions |
| Fructooligosaccharide | 98.7% |
| Dextrin | 1.0% |
| Sucralose | 0.3% |

| Particle size distribution | |
|---|---|
| +20 mesh | 3.1% |
| -20 +40 mesh | 27.0% |
| -40 +60 mesh | 68.1% |
| -60 +80 mesh | 1.8% |
| -80 mesh | 0% |

### Examples 5 - 8

Tests were also run by repeating Examples 1 and 3 except that the galactooligosaccharide was replaced by xylooligosaccharide (Examples 5 and 6) or raffinose oligosaccharide (Examples 7 and 8); a marked improvement in the quality of sweetening composition was achieved in each run.

The sweetening compositions prepared in Examples 1 - 8 in accordance with the invention and conventional oligosaccharides (controls) were compared for measured flowability, sweetness potency and hygroscopicity. The results are shown in Tables 1 and 2 below. The respective parameters were measured by the following methods.
- Flowability :: Indicated by the angle of repose as measured by the injection method; the smaller the angle of repose, the better the flowability.
- Sweetness potency :: Expressed in relative terms, with the potency of sucrose being taken as 100.
- Hygroscopicity :: A 10-g sample of sweetening composition was placed in a petri dish at room temperature (20 ± 1°C) and at a relative humidity of 80%, exposed to air atmosphere for 7 h and measured for the weight gain, which was expressed as a percentage of the initial weight.

The conventional oligosaccharides used as controls had been classified so that 80% of the particles had a size of -40 +60 mesh.

**Table 1**

| Components and proportions (%) | Ex. 1 | Ex. 2 | Cont. | Ex. 3 | Ex. 4 | Cont. |
|---|---|---|---|---|---|---|
| Sucralose | 0.3 | 0.3 | - | 0.3 | 0.3 | - |
| Galactooligosaccharide | 99.7 | - | 100 | 98.7 | - | - |
| Fructooligosaccharide | - | 99.7 | - | - | 98.7 | 100 |
| Xylooligosaccharide | - | - | - | - | - | - |
| Raffinose oligosaccharide | - | - | - | - | - | - |
| Dextrin | - | - | - | 1.0 | 1.0 | - |
| Flowability | 42 | 41 | 49 | 40 | 40 | 49 |
| Sweetness potency | 218 | 210 | 40 | 217 | 208 | 30 |
| Hygroscopicity (%) | 3.4 | 3.6 | 7.6 | 3.0 | 3.1 | 8.0 |

**Table 2**

| Components and proportions (%) | Ex. 5 | Ex. 6 | Cont. | Ex. 7 | Ex. 8 | Cont. |
|---|---|---|---|---|---|---|
| Sucralose | 0.3 | 0.3 | - | 0.3 | 0.3 | - |
| Galactooligosaccharide | - | - | - | - | - | - |
| Fructooligosaccharide | - | - | - | - | - | - |
| Xylooligosaccharide | 99.7 | 98.7 | 100 | - | - | - |
| Raffinose oligosaccharide | - | - | - | 99.7 | 98.7 | 100 |
| Dextrin | - | 1.0 | - | - | 1.0 | - |
| Flowability | 42 | 40 | 47 | 39 | 38 | 42 |
| Sweetness potency | 209 | 207 | 32 | 202 | 200 | 23 |
| Hygroscopicity (%) | 3.1 | 2.9 | 5.5 | 3.0 | 2.7 | 5.4 |

### Example 9

The procedure of Example 1 was repeated except that sucralose was dissolved or suspended in 15 wt% ethyl alcohol heated at 60°C . Thereafter, the surfaces of the fluidized galactooligosaccharide particles were sprayed with the sucralose suspension at an atomizing air pressure of 2.5 kg/cm² as the suspension was supplied from the rotary metering pump whose rotational speed was so controlled that 5 g of the suspension could be fed per minute.

After the end of spraying the hot water, the oligosaccharide particles were dried with hot blown air (70°C) for 10 min.

The oligosaccharide powder thusly coated with sucralose had the formulation and particle size distribution set forth below and it was comprised of highly flowable particles.

| Formulation | |
|---|---|
| Components | Proportions |
| Galactooligosaccharide | 99.7% |
| Sucralose | 0.3% |

| Particle size distribution | |
|---|---|
| +20 mesh | 1.7% |
| -20 +40 mesh | 17.3% |
| -40 +60 mesh | 70.0% |
| -60 +80 mesh | 9.4% |
| -80 mesh | 1.6% |

The oligosaccharide powder prepared in Example 9 had a flowability level of 40, a hygroscopicity level of 3.3 and a sweetness potency of 215.

### Example 10

Galactooligosaccharide (997 g) at least 80% of which was comprised of particles having a size of -40 +60 mesh was charged into a fluidized bed granulation dryer. Heated air (80°C) was blown into the dryer from below so as to keep the galactooligosaccharide in a fluidized state; at the same time, the surfaces of the fluidized oligosaccharide particles were sprayed with a preliminarily conditioned solution of acesulfame-K (3 g) in hot water (80° C, 130 g) at an atomizing air pressure of 2.5 kg/cm² as the solution was supplied from a rotary metering pump whose rotational speed was so controlled that 5 g of the solution could be fed per minute. During the spraying, the exhaust air temperature was at 50 - 55° C.

The acesulfame-K solution was kept heated so that its temperature would not drop below 60° C.

After the end of spraying the metered volume of the acesulfame-K solution, the oligosaccharide particles were sprayed with hot water (80° C, 20 g) over 30 min. After the end of splaying the hot water, the oligosaccharide particles were dried with hot blown air (70° C) for 10 min.

The oligosaccharide powder thusly coated with acesulfame-K had the formulation and particle size distribution set forth below and it was comprised of highly flowable particles.

| Formulation | |
|---|---|
| Components | Proportions |
| Galactooligosaccharide | 99.7% |
| Acesulfame-K | 0.3% |

| Particle size distribution | |
|---|---|
| +20 mesh | 1.5% |
| -20 +40 mesh | 19.3% |
| -40 +60 mesh | 75.2% |
| -60 +80 mesh | 3.3% |
| -80 mesh | 0.7% |

### Example 11

Fructooligosaccharide (997 g) having the same particle size as the galactooligosaccharide used in Example 10 was charged into a fluidized bed granuation dryer of the same type as used in Example 10 and fluidized under the same conditions as employed in Example 10. The fluidized oligosaccharide particles were sprayed with a preconditioned solution of acesulfame-K (3 g) in hot water (80° C, 130 g) under the same conditions as in Example 10; thereafter, the coated oligosaccharide particles were sprayed with hot water (80° C, 20 g) and dried under the same conditions as in Example 10.

The thusly obtained sweetening composition had the formulation and particle size distribution set forth below.

| Formulation | |
|---|---|
| Components | Proportions |
| Fructooligosaccharide | 99.7% |
| Acesulfame-K | 0.3% |

| Particle size distribution | |
|---|---|
| +20 mesh | 1.0% |
| -20 +40 mesh | 20.1% |
| -40 +60 mesh | 75.2% |
| -60 +80 mesh | 3.5% |
| -80 mesh | 0.2% |

### Example 12

Galactooligosaccharide (987 g) having the same particle size as used in Example 10 was charged into a fluidized bed granulation dryer of the same type as used in Example 10. The fluidized oligosaccharide particles were sprayed with a preconditioned solution of acesulfame-K (3 g) and dextrin of DE 8 ± 1 (10 g) in hot water (80° C, 130 g) under the same conditions as in Example 10; thereafter, the coated oligosaccharide particles were sprayed with hot water (80° C, 20 g) under the same conditions as in Example 10. The thusly obtained sweetening composition had the formulation and particle size distribution set forth below.

| Formulation | |
|---|---|
| Components | Proportions |
| galactooligosaccharide | 98.7% |
| Dextrin | 1.0% |
| Acesulfame-K | 0.3% |

| Particle size distribution | |
|---|---|
| +20 mesh | 3.3% |
| -20 +40 mesh | 25.4% |
| -40 +60 mesh | 70.2% |
| -60 +80 mesh | 1.1% |
| -80 mesh | 0% |

### Example 13

The procedure of Example 12 was repeated under the same conditions, except that the galactooligosaccharide was replaced by fructooligosaccharide. The obtained sweetening composition had the formulation and particle size distribution set forth below.

| Formulation | |
|---|---|
| Components | Proportions |
| Fructooligosaccharide | 98.7% |
| Dextrin | 1.0% |
| Acesulfame-K | 0.3% |

| Particle size distribution | |
|---|---|
| +20 mesh | 4.5% |
| -20 +40 mesh | 30.2% |
| -40 +60 mesh | 63.0% |
| -60 +80 mesh | 2.2% |
| -80 mesh | 0.1% |

### Examples 14 - 17

Tests were also run by repeating Examples 10 and 12 except that the galactooligosaccharide was replaced by xylooligosaccharide (Examples 14 and 15) or raffinose oligosaccharide (Examples 16 and 17); a marked improvement in the quality of sweetening composition was achieved in each run.

The sweetening compositions prepared in Example 10 - 17 in accordance with the invention and conventional oligosaccharides (controls) were compared for measured flowability sweetness potency and hygroscopicity. The results are shown in Tables 3 and 4 below. The respective parameters were measured by the same methods as adopted in Example 1.

The conventional oligosaccharides used as controls had been classified so that 80% of the particles had a size of -40 +60 mesh.

**Table 3**

| Components and proportions (%) | Ex. 10 | Ex. 11 | Cont. | Ex. 12 | Ex. 13 | Cont. |
|---|---|---|---|---|---|---|
| Acesulfame-K | 0.3 | 0.3 | - | 0.3 | 0.3 | - |
| Galactooligosaccharide | 99.7 | - | 100 | 98.7 | - | - |
| Fructooligosaccharide | - | 99.7 | - | - | 98.7 | 100 |
| Xylooligosaccharide | - | - | - | - | - | - |
| Raffinose oligosaccharide | - | - | - | - | - | - |
| Dextrin | - | - | - | 1.0 | 1.0 | - |
| Flowability | 42 | 41 | 49 | 41 | 40 | 49 |
| Sweetness potency | 102 | 94 | 40 | 100 | 92 | 30 |
| Hygroscopicity (%) | 3.6 | 3.4 | 7.6 | 3.1 | 3.0 | 8.0 |

**Table 4**

| Components and proportions (%) | Ex. 14 | Ex. 15 | Cont. | Ex. 16 | Ex. 17 | Cont. |
|---|---|---|---|---|---|---|
| Acesulfame-K | 0.3 | 0.3 | - | 0.3 | 0.3 | - |
| Galactooligosaccharide | - | - | - | - | - | - |
| Fructooligosaccharide | - | - | - | - | - | - |
| Xylooligosaccharide | 99.7 | 98.7 | 100 | - | - | - |
| Raffinose oligosaccharide | - | - | - | 99.7 | 98.7 | 100 |
| Dextrin | - | 1.0 | - | - | 1.0 | - |
| Flowability | 42 | 40 | 47 | 39 | 39 | 42 |
| Sweetness potency | 96 | 95 | 32 | 85 | 83 | 23 |
| Hygroscopicity (%) | 2.9 | 2.8 | 5.5 | 3.0 | 2.9 | 5.4 |

### Example 18

The procedure of Example 10 was repeated except that 3 g of the acesulfame-K was replaced by a mixture of acesulfame-K (1.5 g) and sucralose (1.5 g). Galactooligosaccharide (997 g) at least 80% of which was comprised of particles having a size of -40 +60 mesh was charged into a fluidized bed granulation dryer and heated air (80° C) was blown into the dryer from below so as to keep the galactooligosaccharide in a fluidized state. At the same time, the surfaces of the fluidized oligosaccharide particles were sprayed with a preliminarily conditioned solution of the mixture of acesulfame-K and sucralose in hot water (80° C, 130 g) at an atomizing air pressure of 2.5 kg/cm² as the solution was supplied from a rotary metering pump whose rotational speed was so controlled that 5 g of the solution could be fed per minute. After the end of spraying the hot water, the oligosaccharide particles were dried with hot blown air (70° C) for 10 min.

The oligosaccharide powder thusly coated with the mixture of sucralose and acesulfame-K had the formulation and particle size distribution set forth below and it was comprised of highly lowable particles.

| Formulation | |
|---|---|
| Components | Proportions |
| Galactooligosaccharide | 99.7% |
| Acesulfame-K/sucralose | 0.3% |

| Particle size distribution | |
|---|---|
| +20 mesh | 1.5% |
| -20 +40 mesh | 19.3% |
| -40 +60 mesh | 75.2% |
| -60 +80 mesh | 3.3% |
| -80 mesh | 0.7% |

The oligosaccharide powder prepared in Example 18 had a flowability level of 40, a hygroscopicity level of 3.7 and a sweetness potency of 160.

### Example 19

Galactooligosaccharide (997 g) at least 80% of which was comprised of particles having a size of -40 +60 mesh was charged into a fluidized bed granulation dryer. Heated air (80° C) was blown into the dryer from below so as to keep the galactooligosaccharide in a fluidized state; at the same time, the surfaces of the fluidized oligosaccharide particles were sprayed with a prepared solution of alitame (3 g) in hot water ( 80° C, 130 g) at an atomizing air pressure of 2.5 kg/cm² as the solution was supplied from a rotary metering pump whose rotational speed was so controlled that 5 g of the solution could be fed per minute. During the spraying, the exhaust air temperature was at 50 - 55° C.

The alitame solution was kept heated so that its temperature would not drop below 60° C.

After the end of spraying the metered volume of the alitame solution, the oligosaccharide particles were sprayed with hot water (80° C, 20 g) over 30 min. After the end of spraying the hot water, the oligosaccharide particles were dried with hot blown air (70° C) for 10 min.

The oligosaccharide powder thusly coated with alitame had the formulation and particle size distribution set forth below and it was comprised of highly flowable particles.

| Formulation | |
|---|---|
| Components | Proportions |
| Galactooligosaccharide | 99.7% |
| Alitame | 0.3% |

| Particle size distribution | |
|---|---|
| +20 mesh | 1.3% |
| -20 +40 mesh | 18.2% |
| -40 +60 mesh | 74.1% |
| -60 +80 mesh | 5.2% |
| -80 mesh | 1.2% |

### Example 20

Fructooligosaccharide (997 g) having the same particle size as the galactooligosaccharide used in Example 19 was charged into a fluidized bed granulation dryer of the same type as used in Example 19 and fluidized under the same conditions as employed in Example 19. The fluidized oligosaccharide particles were sprayed with a preconditioned solution of alitame (3 g) in hot water (80° C, 130 g) under the same conditions as in Example 19; thereafter, the coated oligosaccharide particles were sprayed with hot water (80° C, 20 g) and dried under the same conditions as in Example 19.

The thusly obtained sweetening composition had the formulation and particle size distribution set forth below.

| Formulation | |
|---|---|
| Components | Proportions |
| Fructooligosaccharide | 99.7% |
| Alitame | 0.3% |

| Particle size distribution | |
|---|---|
| +20 mesh | 1.1% |
| -20 +40 mesh | 19.9% |
| -40 +60 mesh | 76.4% |
| -60 +80 mesh | 2.1% |
| -80 mesh | 0.5% |

### Example 21

Galactooligosaccharide (987 g) having the same particle size as used in Example 19 was charged into a fluidized bed granulation dryer of the same type as used in Example 19 and fluidized under the same conditions as employed in Example 19. The fluidized oligosaccharide particles were sprayed with a preconditioned solution of alitame (3 g) and dextrin of DE 8 ± 1(10 g) in hot water (80° C, 130 g) under the same conditions as in Example 19; thereafter, the coated oligosaccharide particles were sprayed with hot water (80° C, 20 g) under the same conditions as in Example 19. The thusly obtained sweetening compositions had the formulation and particle size distribution set forth below.

| Formulation | |
|---|---|
| Components | Proportions |
| Galactooligosaccharide | 98.7% |
| Dextrin | 1.0% |
| Alitame | 0.3% |

| Particle size distribution | |
|---|---|
| +20 mesh | 2.0% |
| -20 +40 mesh | 24.4% |
| -40 +60 mesh | 72.6% |
| -60 +80 mesh | 1.0% |
| -80 mesh | 0% |

### Example 22

The procedure of Example 21 was repeated under the same conditions, except that the galactooligosaccharide was replaced by fructooligosaccharide. The obtained sweetening composition had the formulation and particle size distribution set forth below.

| Formulation | |
|---|---|
| Components | Proportions |
| Fructooligosaccharide | 98.7% |
| Dextrin | 1.0% |
| Alitame | 0.3% |

| Particle size distribution | |
|---|---|
| +20 mesh | 3.5% |
| -20 +40 mesh | 29.1% |
| -40 +60 mesh | 66.0% |
| -60 +80 mesh | 1.4% |
| -80 mesh | 0% |

### Examples 23 - 26

Tests were also run by repeating Examples 19 and 21 except that the galactooligosaccharide was replaced by xylooligosaccharide (Examples 23 and 24) or raffinose oligosaccharide (Examples 25 and 26); a marked improvement in the quality of sweetening composition was achieved in each run.

The sweetening compositions prepared in Examples 19 - 26 in accordance with the invention and conventional oligosaccharides (controls) were compared for measured flowability, sweetness potency and hygroscopicity. The results are shown in Tables 5 and 6 below. The respective parameters were measured by the same methods as adopted in Example 1.

The conventional oligosaccharides used as controls had been classified so that 80% of the particles had a size of -40 +60 mesh.

**Table 5**

| Components and proportions (%) | Ex. 19 | Ex. 20 | Cont. | Ex. 21 | Ex. 22 | Cont. |
|---|---|---|---|---|---|---|
| Alitame | 0.3 | 0.3 | - | 0.3 | 0.3 | - |
| Galactooligosaccharide | 99.7 | - | 100 | 98.7 | - | - |
| Fructooligosaccharide | - | 99.7 | - | - | 98.7 | 100 |
| Xylooligosaccharide | - | - | - | - | - | - |
| Raffinose oligosaccharide | - | - | - | - | - | - |
| Dextrin | - | - | - | 1.0 | 1.0 | - |
| Flowability | 40 | 42 | 49 | 39 | 41 | 49 |
| Sweetness potency | 98 | 96 | 40 | 100 | 93 | 30 |
| Hygroscopicity (%) | 3.2 | 3.6 | 7.6 | 2.8 | 3.0 | 8.0 |

**Table 6**

| Components and proportions (%) | Ex. 23 | Ex. 24 | Cont. | Ex. 25 | Ex. 26 | Cont. |
|---|---|---|---|---|---|---|
| Alitame | 0.3 | 0.3 | - | 0.3 | 0.3 | - |
| Galactooligosaccharide | - | - | - | - | - | - |
| Fructooligosaccharide | - | - | - | - | - | - |
| Xylooligosaccharide | 99.7 | 98.7 | 100 | - | - | - |
| Raffinose oligosaccharide | - | - | - | 99.7 | 98.7 | 100 |
| Dextrin | - | 1.0 | - | - | 1.0 | - |
| Flowability | 41 | 39 | 47 | 40 | 38 | 42 |
| Sweetness potency | 94 | 89 | 32 | 84 | 80 | 23 |
| Hygroscopicity (%) | 3.0 | 2.8 | 5.5 | 2.8 | 2.8 | 5.4 |

### Example 27

Galactooligosaccharide (997 g) at least 80% of which was comprised of particles having a size of -40 +60 mesh was charged into a fluidized bed granulation dryer. Heated air (80° C) was blown into the dryer from below so as to keep the galactooligosaccharide in a fluidized state; at the same time, the surfaces of the fluidized oligosaccharide particles were sprayed with a preliminarily conditioned solution of aspartame (3 g) in hot water ( 80° C, 130 g) at an atomizing air pressure of 2.5 kg/cm² as the solution was supplied from a rotary metering pump whose rotational speed was so controlled that 5 g of the solution could be fed per minute. During the spraying, the exhaust air temperature was at 50 - 55° C.

The aspartame solution was kept heated so that its temperature would not drop below 60° C.

After the end of spraying the metered volume of the aspartame solution, the oligosaccharide particles were sprayed with hot water (80° C, 20 g) over 30 min. After the end of spraying the hot water, the oligosaccharide particles were dried with hot blown air (70° C) for 10 min.

The oligosaccharide powder thusly coated with aspartame had the formulation and particle size distribution set forth below and it was comprised of highly flowable particles.

| Formulation | |
|---|---|
| Components | Proportions |
| Galactooligosaccharide | 99.7% |
| Aspartame | 0.3% |

| Particle size distribution | |
|---|---|
| +20 mesh | 1.5% |
| -20 +40 mesh | 17.2% |
| -40 +60 mesh | 76.0% |
| -60 +80 mesh | 4.3% |
| -80 mesh | 1.0% |

### Example 28

Fructooligosaccharide (997 g) having the same particle size as the galactooligosaccharide used in Example 27 was charged into a fluidized bed granulation dryer of the same type as used in Example 27 and fluidized under the same conditions as employed in Example 27. The fluidized oligosaccharide particles were sprayed with a preconditioned solution of aspartame (3 g) in hot water (80° C, 130 g) under the same conditions as in Example 27; thereafter, the coated oligosaccharide particles were sprayed with hot water (80° C, 20 g) and dried under the same conditions as in Example 27.

The thusly obtained sweetening composition had the formulation and particle size distribution set forth below.

| Formulation | |
|---|---|
| Components | Proportions |
| Fructooligosaccharide | 99.7% |
| Aspartame | 0.3% |

| Particle size distribution | |
|---|---|
| +20 mesh | 1.1% |
| -20 +40 mesh | 18.9% |
| -40 +60 mesh | 77.0% |
| -60 +80 mesh | 2.5% |
| -80 mesh | 0.5% |

### Example 29

Galactooligosaccharide (987 g) having the same particle size as used in Example 27 was charged into a fluidized bed granulation dryer of the same type as used in Example 27 and fluidized under the same conditions as employed in Example 27. The fluidized oligosaccharide particles were sprayed with a preconditioned solution of aspartame (3 g) and dextrin of DE 8 ± 1(10 g) in hot water (80° C, 130 g) under the same conditions as in Example 27; thereafter, the coated oligosaccharide particles were sprayed with hot water (80° C, 20 g) under the same conditions as in Example 27. The thusly obtained sweetening composition had the formulation and particle size distribution set forth below.

| Formulation | |
|---|---|
| Components | Proportions |
| Galactooligosaccharide | 98.7% |
| Dextrin | 1.0% |
| Aspartame | 0.3% |

| Particle size distribution | |
|---|---|
| +20 mesh | 2.2% |
| -20 +40 mesh | 23.1% |
| -40 +60 mesh | 73.2% |
| -60 +80 mesh | 1.5% |
| -80 mesh | 0% |

### Example 30

The procedure of Example 29 was repeated under the same conditions, except that the galactooligosaccharide was replaced by fructooligosaccharide. The obtained sweetening composition had the formulation and particle size distribution set forth below.

| Formulation | |
|---|---|
| Components | Proportions |
| Fructooligosaccharide | 98.7% |
| Dextrin | 1.0% |
| Aspartame | 0.3% |

| Particle size distribution | |
|---|---|
| +20 mesh | 2.3% |
| -20 +40 mesh | 25.2% |
| -40 +60 mesh | 71.4% |
| -60 +80 mesh | 1.1% |
| -80 mesh | 0% |

### Examples 31 - 34

Tests were also run by repeating Examples 27 and 29 except that the galactooligosaccharide was replaced by xylooligosaccharide (Examples 31 and 32) or raffinose oligosaccharide (Examples 33 and 34); a marked improvement in the quality of sweetening composition was achieved in each run.

The sweetening compositions prepared in Examples 27 - 34 in accordance with the invention and conventional oligosaccharides (controls) were compared for measured flowability, sweetness potency and hygroscopicity. The results are shown in Tables 7 and 8 below. The respective parameters were measured by the same methods as adopted in Example 1.

The conventional oligosaccharides used as controls had been classified so that 80% of the particles had a size of -40 +60 mesh.

**Table 7**

| Components and proportions (%) | Ex. 27 | Ex. 28 | Cont. | Ex. 29 | Ex. 30 | Cont. |
|---|---|---|---|---|---|---|
| Aspartame | 0.3 | 0.3 | - | 0.3 | 0.3 | - |
| Galactooligosaccharide | 99.7 | - | 100 | 98.7 | - | - |
| Fructooligosaccharide | - | 99.7 | - | - | 98.7 | 100 |
| Xylooligosaccharide | - | - | - | - | - | - |
| Raffinose oligosaccharide | - | - | - | - | - | - |
| Dextrin | - | - | - | 1.0 | 1.0 | - |
| Flowability | 40 | 41 | 49 | 41 | 41 | 49 |
| Sweetness potency | 100 | 95 | 40 | 100 | 94 | 30 |
| Hygroscopicity (%) | 3.1 | 3.5 | 7.6 | 2.9 | 3.0 | 8.0 |

**Table 8**

| Components and proportions (%) | Ex. 31 | Ex. 32 | Cont. | Ex. 33 | Ex. 34 | Cont. |
|---|---|---|---|---|---|---|
| Aspartame | 0.3 | 0.3 | - | 0.3 | 0.3 | - |
| Galactooligosaccharide | - | - | - | - | - | - |
| Fructooligosaccharide | - | - | - | - | - | - |
| Xylooligosaccharide | 99.7 | 98.7 | 100 | - | - | - |
| Raffinose oligosaccharide | - | - | - | 99.7 | 98.7 | 100 |
| Dextrin | - | 1.0 | - | - | 1.0 | - |
| Flowability | 40 | 41 | 47 | 38 | 39 | 42 |
| Sweetness potency | 93 | 90 | 32 | 82 | 81 | 23 |
| Hygroscopicity (%) | 2.8 | 2.8 | 5.5 | 2.9 | 2.7 | 5.4 |

As is clear from the foregoing description, the sweetening compositions of the present invention have higher fluidity and sweetness potency, are less hygroscopic and can be manufactured more easily than conventional oligosaccharides; hence, they are of excellent value for industrial use.

## Claims

1. A sweetening composition comprising an oligosaccharide in powder or granulated form that is film coated or otherwise coated with at least one synthetic sweetener selected from the group consisting of 4,1',6'-trichloro-4,1',6'-trideoxygalactosucrose, 6-methyl- 3,4-dihydro-1,2,3-oxathiazine-4-one-2,2-dioxide-potassium, 3-(L-aspartyl-D-alanine-amide)-2,2,4,4-tetramethylethane and α-L-aspartyl-L-phenylalanine methyl ester.

2. A sweetening composition according to claim 1 wherein the oligosaccharide in powder or granulated form has a particle size of 5 - 200 mesh.

3. A sweetening composition according to claim 1 wherein the oligosaccharide in powder or granulated form contains at least 10 wt% of at least one oligosaccharide selected from the group consisting of trisaccharide, tetrasaccharide, pentasaccharide, hexasaccharide and heptasaccharide.

4. A sweetening composition according to claim 3 wherein the oligosaccharide in powder or granulated form is lactulose, fructooligosaccharide, galactooligosaccharide, raffinose, isomaltooligosaccharide, xylooligosaccharide, lactosucrose, palatinose oligosaccharide or gentioligosaccharide.

5. A process for producing a sweetening composition comprising the steps of film coating or otherwise coating an oligosaccharide in powder or granulated form with an aqueous or alcoholic solution or slurry of at least one synthetic sweetener selected from the group consisting of 4,1', 6'-trichloro-4,1'6'-trideoxygalactosucrose, 6-methyl-3, 4-dihydro-1,2,3-oxathiazine-4-one-2,2-dioxide-potassium, 3-(L-aspartyl-D-alanine-amide)-2,2,4,4-tetramethylethane and α-L-aspartyl-L-phenylalanine methyl ester, and drying the coated oligosaccharide.

6. A process for producing a sweetening composition according to claim 5 wherein the aqueous or alcoholic solution or slurry further contains dextrin.
